# EUROPÄISCHE PATENTSCHRIFT

(11) **EP 0 512 347 B1**
(45) Veröffentlichungstag und Bekanntmachung des Hinweises auf die Patenterteilung: **26.07.2000**
(21) Anmeldenummer: 92107128.8
(22) Anmeldetag: 27.04.1992
(51) Int. Cl.: C08G 18/10, C08G 18/48, C08G 18/76

(54) **Verfahren zur Herstellung von Urethangruppen aufweisenden Polyharnstoff-Elastomeren**
Process for the preparation of urethane groups-containing polyurea elastomers
Procédé de préparation d'élastomères de polyurée contenant des groupes uréthane

(30) Priorität: 08.05.1991 DE 4115037
(43) Veröffentlichungstag der Anmeldung: 11.11.1992
(73) Patentinhaber: BAYER AG, 51368 Leverkusen (DE)
(72) Erfinder: Mayer, Eduard, Dr., W-4047 Dormagen (DE); Schmidt, Manfred, Dr., W-4047 Dormagen (DE); Meiners, Hans-Joachim, Dr., W-5090 Leverkusen (DE); Ruckes, Andreas, Dr., W-5090 Leverkusen 1 (DE)

(56) Entgegenhaltungen:
- EP-A- 0 075 130
- EP-A- 0 218 175
- EP-A- 0 410 240
- DE-A- 3 827 595
- US-A- 3 428 610

## Beschreibung

Die Erfindung betrifft ein neues Verfahren zur Herstellung von Urethangruppen aufweisenden Polyharnstoff-Elastomeren auf der Basis von Polyisocyanaten oder Polyisocyanatgemischen der Diphenylmethanreihe, höhermolekularen Polyhydroxylverbindungen und alkylsubstituierten aromatischen Diaminen nach dem Prinzip der Reaktionsspritzgußtechnik.

Die Herstellung von Urethangruppen aufweisenden Polyharnstoff-Elastomeren auf der Bais von Polyisocyanaten oder Polyisocyanatgemischen der Diphenylmethanreihe, höhermolekularen Polyhydroxylverbindungen und alkylsubstituierten aromatischen Diaminen nach dem Prinzip der Reaktionsspritzgußtechnik ist aus der DE-AS 2 622 951 (= US-PS 4 218 543) bereits bekannt. Diese beschreibt das one-shot-Verfahren. Dabei werden die Polyisocyanatkomponenten mit Verbindungen die gegenüber Isocyanatgruppen reaktionsfähige Gruppen besitzen und weiteren Zusätzen vermischt. Das Verfahren ist auf die Mitverwendung von Katalysatoren für die Reaktion zwischen Isocyanatgruppen und Hydroxylgruppen angewiesen.

Aus der DE-OS 3 827 595 ist bekannt, daß eine praktisch vollständige Vorreaktion der höhermolekularen Polyolkomponente b) mit der Polyisocyanatkomponente a) und anschließende Umsetzung des resultierenden NCO-Semiprepolymeren mit der Diaminkomponente zu einer Reihe bemerkenswerter Vorteile gegenüber der one-shot-Methode, insbesondere bezüglich der mechanischen und thermomechanischen Eigenschaften, inbesondere Wärmeformbeständigkeit, führt, trotz großer unterschiedlicher Volumenströme (großes Volumen der NCO-Semiprepolymeren, kleines Volumen der Diaminkomponente).

Die Autoren der DE-OS 3 827 595 waren jedoch offensichtlich der Ansicht, daß die Herstellung hochwertiger Elastomerer nur gelingt, wenn als höhermolekulare Polyhydroxylverbindungen b) solche einer (mittleren) Hydroxylfunktionalität von mindestens 2,5 eingesetzt werden.

Obwohl das Verfahren der DE-OS 3 827 595 die Herstellung von elastomeren Formkörpern eines hohen mechanischen Eigenschaftsniveaus gestattet, weist es insbesondere den Nachteil auf, daß die zwingende Verwendung von verzweigten Polyhydroxylverbindungen b) zu relativ hohen Viskositäten der NCO-Semiprepolymeren führt, was oftmals das Befüllen von großen bzw. komplizierten Formen, insbesondere bei Mitverwendung von mineralischen Verstärkungsstoffen erschwert bzw. unmöglich macht.

Dem nachstehend näher beschriebenen erfindungsgemäßen Verfahren liegt die überraschende Beobachtung zugrunde, daß auch bei Verwendung von höhermolekularen Polyhydroxylverbindungen b) mit einer (mittleren) Hydroxylfunktionalität von 1,9 bis 2,4 nach dem genannten Semiprepolymer-Verfahren unter Anwendung der Reaktionsspritzgußtechnik elastomere Formkörper eines hohen mechanischen Eigenschaftsniveaus zugänglich sind, wobei sich das Verfahren insbesondere durch folgende Vorteile auszeichnet:
- die Viskosität der Semiprepolymeren aus den Ausgangskomponenten a) und b) ist bei ansonsten vergleichbaren Parametern ganz wesentlich reduziert. So weist ein erfindungsgemäß zum Einsatz gelangendes Semiprepolymer A) mit einem NCO-Gehalt von 11,5 % auf Basis von Polyetherdiolen der OH-Zahl 56 eine maximale Viskosität bei 25° C von 3 000 mPa.s und ein analoges Semiprepolymer gemäß DE-OS 3 827 595 mit einem NCO-Gehalt von 11,5 % auf Basis eines ansonsten analogen Polyethertriols der OH-Zahl 56, eine Viskosität bei 25° C von mindestens 4 500 mPa.s auf.
- Erfindungsgemäß können als Polyisocyanatkomponente a) vergleichsweise höherfunktionelle und damit oftmals billigere Polyisocyanatgemische der Diphenylmethanreihe eingesetzt werden.
- Das erfindungsgemäße Verfahren führt zu Formkörpern einer vergleichsweise verbesserten Entformbarkeit.
- Aufgrund der erfindungsgemäßen Maßnahmen erfolgt ein schnellerer Aufbau der Härte (SHORE D).
- Bei der erfindungsgemäß ohne weiteres möglichen Verwendung von Polypropylenoxid-Polyethern mit Hydroxylzahlen ≥ 28 als Komponente b) ist die Herstellung von transparenten Formkörpern möglich.

Die übrigen Vorveröffentlichungen auf diesem speziellen Sachgebiet liegen dem nachstehend näher beschriebenen erfindungsgemäßen Verfahren ferner als die bereits zitierte DE-OS 3 827 595.

So beschreibt beispielsweise die US-PS 4 297 444 zwar die Herstellung von Polyurethanformkörpern nach dem Prinzip der Reaktionsspritzgußtechnik unter Verwendung von organischen Polyisocyanaten, höhermolekularen Polyhydroxylverbindungen und niedermolekularen Kettenverlängerungsmitteln, wobei auch hier gemäß einer bevorzugten Arbeitsweise die Gesamtmenge der höhermolekularen Polyhydroxylkomponente vorab mit der Polyisocyanatkompokomponente zu einem NCO-Semiprepolymer umgesetzt wird, jedoch vermittelt diese Vorveröffentlichung keinen Hinweis, daß auch Systeme der erfindungsgemäß einzusetzenden Art, d.h. solche, deren Diaminkomponente aus alkylsubstituierten aromatischen Diaminen besteht, nach diesem Prinzip verarbeitbar sein würden bzw. bei einem solchen Verfahren die genannten Vorteile resultieren würden. Die Vorveröffentlichung erwähnt in der Liste der geeigneten Kettenverlängerungsmittel beiläufig zwar auch aromatische Diamine, ohne jedoch hierauf näher einzugehen. Als bevorzugte Kettenverlängerungsmittel werden vielmehr einfache Diole wie Ethylenglykol oder 1,4-Butandiol herausgestellt. In den Ausführungsbeispielen wird ausschließlich Ethylenglykol verwendet. Die Verarbeitbarkeit von Reaktivsystemen, bestehend aus einem großen Volumenstrom NCO-Semiprepolymer und einem kleinen Volumenstrom hochreaktiver Diamine der erfindungegemäß einzusetzenden Art nach der Reaktionsspritzgußtechnik konnte somit aus der Lehre der US-PS 4 297 444 nicht hergeleitet werden.

Auch die Lehre der DE-AS 1 240 654 konnte das erfindungsgemäße Verfahren nicht nahelegen, da gemäß dieser Vorveröffentlichung, wie den Ausführungsbeispielen zu entnehmen, vorzugsweise monomerenfreie, d.h. echte NCO-Prepolymere auf Basis anderer Polyisocyanate als solchen der erfindungsgemäß einzusetzenden Art und difunktionelle Polyhydroxylverbindungen, vorzugsweise in Gegenwart von Lösungsmitteln mit alkylsubstituierten Diaminen nach dem klassischen Prepolymerverfahren und keineswegs nach dem Prinzip der Reaktionsspritzgußtechnik zur Reaktion gebracht werden.

EP-A-75130 beschreibt ein R.I.M-Verfahren, bei dem als Isocyanatkomponente ein Prepolymer eingesetzt wird, welches durch Reaktion einer Polyols mit reinem 4,4'-Diisocyanotodiphenylmethan erhalten wird. Das Prepolymer wird in dem RIM-Verfahren mit einer Mischung aus einem polymeren Polyol und einem aromatischen Diamin, das zumindest in einer ortho-Stellung zu den Aminogruppen einen Alkylsubstituenten aufweist.

Gegenstand der Erfindung ist ein Verfahren zur Herstellung von gegebenenfalls zellförmigen, elastischen Formkörpern mit einer geschlossenen Oberflächenschicht aus Urethangruppen aufweisenden Polyharnstoff-Elastomeren auf der Basis von
a) einer Polyisocyanatkomponente, bestehend aus Gemischen von 4,4'-Diisocyanatodiphenylmethan, 2,2'-Diisocyanatodiphenylmethan und 2,4'-Diisocyanatodiphenylmethan mit ihren höheren Homologen
b) einer Polyolkomponente mit einem (mittleren) Molekulargewicht von 1500 bis 3000, bestehend aus mindestens einem, gegebenenfalls dispergierte organische Füllstoffe enthaltenden Polyetherpolyol,
c) aromatischen Diaminen, die zumindest in jeweils einer ortho-Stellung zu den Aminogruppen einen Alkylsubstituenten aufweisen,
   und gegebenenfalls
d) den aus der Polyurethanchemie an sich bekannten Hilfs- und Zusatzmitteln,
   wobei als Komponente d), gegebenenfalls neben weiteren Hilfs- und Zusatzmitteln, gegenüber Isocyanatgruppen reaktionsfähige Verbindungen, ausgewählt aus der Gruppe bestehend aus aliphatischen, gegebenenfalls tertiäre Aminstickstoffatome aufweisenden Polyolen des Molekular gewichtsbereichs 62 bis 10001 aliphatischen Aminopolyethern des Molekulargewichtsbereichs 200 bis 3000 mit mindestens zwei primären Aminogruppen pro Molekül und Gemischen derartiger Verbindungen in einer Gesamtmenge von bis zu 50 Äquivalentprozent im Sinne der IsocyanatAdditionsreaktion, bezogen auf die Aminogruppen der Komponente c), als Teil der Komponente B) mitverwendet werden, wobei in einem ersten Reaktionsschritt mindestens 90 % der Komponente b) mit der Gesamtmenge der Komponente a) unter Einhaltung eines NCO/OH-Äquivalentverhältnisses von mindestens 3,2:1 zu einem NCO-Semiprepolymeren A) umgesetzt wird, welches anschließend in einem zweiten Reaktionsschritt nach dem Prinzip der Reaktionsspritzgußtechnik in geschlossenen Formen mit einer Komponente B) unter Einhaltung einer NCO-Kennzahl, bezogen auf die Isocyanatgruppen der Komponente A) und die gegenüber Isocyanatgruppen reaktionofähigen Gruppen der Komponente B) von 70 bis 330 zu Reaktion bringt, wobei die Komponente B) aus 0 bis 10 % der Komponente b), der Komponente c) und zumindest den gegenüber Isocyanatgruppen reaktionsfähigen Einzelkomponenten der gegebenenfalls eingesetzten Komponente d) besteht, und wobei gegebenenfalls außerdem mitverwendete Hilfs- und Zusatzmittel d) der Komponente A) und/oder der Komponente B) einverleibt werden, dadurch gekennzeichnet, daß
   bei der Herstellung des NCO-Semiprepolymeren A) Art und Mengenverhältnisse der Komponenten a) und b) so gewählt werden, daß die Semiprepolymeren A) bei 25° C eine Viskosität von maximal 3000 mPa.s und einen NCO-Gehalt von 8 - 15 Gew.-% aufweisen und
   die Komponente b) eine mittlere Hydroxylfunktionalität von maximal 2,4 aufweist.

Der Begriff "NCO-Semiprepolymer" steht für Umsetzungsprodukte von Polyisocyanaten der erfindungsgemäß als Komponente a) einzusetzenden Art mit unterschüssigen Mengen an höhermolekularen Polyhydroxylverbindungen der erfindungsgemäß als Komponente b) einzusetzenden Art, wobei die Mengenverhältnisse der Komponenten a) und b) bei der Herstellung der NCO-Semiprepolymeren (=Komponente A) in einem NCO/OH-Äquivalentverhältnis von 3,2:1 und 19:1, vorzugsweise 4:1 bis 10:1 und besonders bevorzugt 5:1 bis 7:1 entsprechenden Mengen eingesetzt werden, und wobei im übrigen Art und Mengenverhältnisse der Komponenten a) und b) im Rahmen der hier und nachstehend gemachten Offenbarung so gewählt werden, daß die Semiprepolymeren A) bei 25° C eine Viskosität von maximal 3 000 mPa.s, insbesondere 1 000 bis 2 600 mPa.s und einen NCO-Gehalt von 8 bis 15, insbesondere 10 bis 14 Gew.-% aufweisen.

Unter "Isocyanatkennzahl" versteht man den Quotienten aus Anzahl der Isocyanatgruppen und Anzahl der gegenüber Isocyanatgruppen reaktionsfähigen Gruppen, multipliziert mit 100.

Beim erfindungsgemäßen Verfahren werden als Ausgangskomponente a) Gemische von 4,4'-Diisocyanatodiphenylmethan mit 2,2'- und 2,4'-Diisocyanatodiphenylmethan, mit ihren höheren Homologen, wie sie bei der Phosgenierung von Anilin/Formaldehyd-Kondensaten anfallen, durch partielle Carbodiimidisierung der Isocyanatgruppen der genannten Di- und/oder Polyisocyanate, modifizierte Di- und/oder Polyisocyanate oder beliebige Gemische derartiger Polyisocyanate.

Gegebenenfalls können jedoch auch bis zu 30 Gew.-%, vorzugsweise bis 20 Gew.-%, bezogen auf die Komponente a), Urethangruppen aufweisende Umsetzungsprodukte der genannten Di- und/oder Polyisocyanate mit unterschüssigen Mengen an aliphatischen Polyhydroxylverbindungen des Molekulargewichtsbereichs 62 bis 700 wie beispielsweise Ethylenglykol, Trimethylolpropan, Propylenglykol, Dipropylenglykol oder Polypropylenglykole des genannten Molekulargewichtsbereiches, bei der Semiprepolymerisierung mitverwendet werden.

Die Polyolkomponente b) weist ein aus dem Hydroxylgruppengehalt und der Hydroxylfunktionalität errechenbares (mittleres) Molekulargewicht von 1 500 bis 3 000, bevorzugt von 1 700 bis 2 500 und eine (mittlere) Hydroxylfunktionalität von 1,9 bis 2,4, bevorzugt von 1,9 bis 2,1 auf. Besonders bevorzugt handelt es sich bei den Polyolen der Komponente b) um Polyetherdiole, wie sie durch an sich bekannte Alkoxylierung von difunktionellen Startermolekülen, wie beispielsweise Wasser, Ethylenglykol oder Propylenglykol zugänglich sind. Geeignet sind jedoch alle den gemachten Definitionen entsprechenden Polyetherpolyole bzw. Gemische von Polyetherpolyolen. In Betracht kommen auch entsprechende Polyetherpolyole, die organische Füllstoffe in dispergierter Form enthalten. Bei diesen dispergierten Füllstoffen handelt es sich beispielsweise um Vinylpolymerisate, wie sie z.B. durch Polymerisation von Acrylnitril und Styrol in den Polyetherpolyolen als Reaktionsmedium entstehen (US-PS 3 383 351, 3 304 273, 3 523 093, 3 110 695, DE-PS 1 152 536) oder um Polyharnstoffe oder Polyhydrazide, wie sie durch eine Polyadditionsreaktion in den Polyetherpolyolen als Reaktionsmedium aus organischen Diisocyanaten und Aminen, Diaminen oder Polyaminen, bzw. Hydrazin entstehen (DE-PS 1 260 142, DE-OS 2 423 984, 2 513 815, 2 550 833, 2 550 862, 2 633 293 oder 2 550 796).

Die Polyetherpolyole werden in an sich bekannter Weise durch Alkoxylierung von geeigneten Startermolekülen oder von Gemischen geeigneter Startermoleküle hergestellt, wobei zur Alkoxylierung insbesondere Propylenoxid und gegebenenfalls zusätzlich Ethylenoxid verwendet werden.

Geeignete Startermoleküle sind beispielsweise Wasser, Ethylenglykol, Propylenglykol, Glycerin, Trimethylolpropan, Pentaerythrit, Sorbit oder Rohrzucker bzw. Gemische derartiger Verbindungen, wobei die Funktionalität der Startermoleküle bzw. die mittlere Funktionalität der Gemische der Startermoleküle den oben gemachten Ausführungen bezüglich der Hydroxylfunktionalität angepaßt werden muß.

Gut geeignet sind insbesondere auch solche Polyetherpolyole b), bei deren Herstellung durch Alkoxylierung geeigneter Startermoleküle ausschließlich Propylenoxid als Alkylenoxid verwendet worden ist, und die demzufolge überwiegend sekundäre Hydroxylgruppen aufweisen.

Bei der Komponente c) handelt es sich um Diamine mit ausschließlich aromatisch gebundenen primären Aminogruppen, die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 4, vorzugsweise 1 bis 3, Kohlenstoffatomen aufweisen, besonders bevorzugt um solche, die in jeweils mindestens einer ortho-Stellung zu den Aminogruppen einen Ethyl-, n-Propyl- und/oder Isopropylsubstituenten und gegebenenfalls in weiteren ortho-Stellungen zu den Aminogruppen Methylsubstituenten aufweisen.

Beispiele für derartige Diamine bzw. bevorzugte Diamine sind 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, dessen technische Gemische mit 1-Methyl-3,5-diethyl-2,6-diaminobenzol oder 3,5,3',5'-Tetraisopropyl-4,4'-diaminodiphenylmethan.

Beliebige Gemische derartiger Diamine können ebenfalls als Komponente c) verwendet werden. Besonders bevorzugt handelt es sich bei der Komponente c) um 1-Methyl-3,5-diethyl-2,4-diaminobenzol oder um dessen technische Gemische mit 1-Methyl-3,5-diethyl-2,6-diaminobenzol (DETDA).

Bei den gegebenenfalls mitzuverwendenden Hilfs- und Zusatzmitteln d) handelt es sich beispielsweise um mineralische Füllstoffe, leitfähige Füllstoffe, wie Leitfähigkeitsruße, Farbstoffe, Pigmente. organische Treibmittel und/oder innere Formtrennmittel. Derartige, an sich bekannte Hilfs- und Zusatzmittel sind beispielsweise in EP-B-81 701 beschrieben. Zu den bevorzugten mineralischen Füllstoffen gehören beispielsweise Glasfasern, während als bevorzugte innere Formtrennmittel, Zinkstearat in Kombination mit geeigneten Verträglichmachern (DE-OS 3 626 673, 3 639 502, US-PS 4 519 965) und/oder Rizinolester (DE-OS 3 436 163) zum Einsatz gelangen. Bei den genannten Veträglichmachern für Zinkstearat handelt es sich oftmals um gegenüber Isocyanatgruppen reaktionsfähige Verbindungen. Die Hilfs- und Zusatzmittel d) enthalten somit oftmals derartige, gegenüber NCO-Gruppen reaktive Komponenten. Auch andere, gegenüber Isocyanatgruppen reaktionsfähige Verbindungen, wie beispielsweise aliphatische Polyole des Molekulargewichtsbereichs 62 bis 1 000, die stickstofffrei sein oder auch tert. Aminstickstoffatome aufweisen können, können in der Komponente d) vorliegen. Bei den gegebenenfalls in der gegebenenfalls mitverwendeten Komponente d) vorliegenden Verbindungen mit gegenüber Isocyanatgruppen reaktionsfähigen Gruppen handelt es sich somit vor allem um solche, ausgewählt aus der Gruppe bestehend aus (i) gegebenenfalls tert. Aminstickstoffatome aufweisenden aliphatischen Polyolen des Molekulargewichtsbereichs 62 bis 1 000, (ii) mindestens zwei primäre Aminogruppen aufweisenden aliphatischen Aminopolyethern des Molekulargewichtsbereichs 200 bis 3 000 und (iii) Gemischen derartiger Verbindungen. Im Falle der Mitverwendung derartiger Verbindungen d) mit gegenüber Isocyanatgruppen reaktionsfähigen Gruppen bilden diese einen Teil der Komponente B). Im übrigen können die Hilfs- und Zusatzmittel d), soweit sie im Sinne der Isocyanat-Additionsreaktion inert sind, sowohl der Komponente A) als auch der Komponente B) zugemischt werden. Die Menge der gegebenenfalls mitverwendeten, gegenüber Isocyanatgruppen reaktionsfähigen Verbindungen d) kann bis zu 50 Äquivalentprozent, vorzugsweise bis zu 20 Äquivalentprozent im Sinne der Isocyanat-Additionsreaktion, bezogen auf die Aminogruppen der Komponente c), betragen.

Zur Durchführung des erfindungsgemäßen Verfahrens wird zunächst aus der Polyisocyanatkomponente a) und mindestens 90 %, vorzugsweise der Gesamtmenge der Polyolkomponente b) ein NCO-Semiprepolymer A) hergestellt.

Die diesbezügliche Umsetzung erfolgt im allgemeinen innerhalb des Temperaturbereichs von 25 bis 100°C. Bei der Herstellung der NCO-Semiprepolymere kann nach unterschiedlichen Varianten vorgegangen werden, beispielsweise kann die Gesamtmenge der Polyisocyanatkomponente a) mit der Gesamtmenge der zur Herstellung der NCO-Semiprepolymeren A) vorgesehenen Komponente b) umgesetzt werden, jedoch ist es auch möglich, zunächst nur einen Teil der Polyisocyanatkomponente a) mit der zur Herstellung der NCO-Semiprepolymeren vorgesehenen Menge der Komponente b) umzusetzen und anschließend dieses Umsetzungsprodukt mit der restlichen Menge der Polyisocyanatkomponente a) abzumischen.

Die so erhaltenen NCO-Semiprepolymeren stellen dann die Komponente A) für die weitere Umsetzung dar.

Die Komponente A) wird in der zweiten Stufe des erfindungsgemäßen Verfahrens mit der Komponente B) nach dem Prinzip der Reaktionsspritzgußtechnik unter Verwendung von geschlossenen Formen verarbeitet.

Die Komponente B) besteht aus bis zu 10 % der Polyolkomponente b) die nicht zur Herstellung der NCO-Semiprepolymeren A) verwendet worden ist, der Diaminkomponente c) und den gegebenenfalls mitverwendeten Hilfs- und Zusatzmittel d) mit gegenüber Isocyanatgruppen reaktionsfähigen Gruppen.

Die gegebenenfalls außerdem mitverwendeten, gegenüber Isocyanatgruppen inerten Hilfs- und Zusatzmittel können, wie bereits dargelegt, sowohl der Komponente A) als auch der Komponente B) vor der Durchführung der zweiten Stufe des Verfahrens einverleibt werden.

Bei der Durchführung der zweiten Stufe des erfindungsgemäßen Verfahrens wird nach der bekannten Reaktionsspritzgußtechnik (RSG-Verfahren, englisch: "RIM-process") verfahren, wie sie beispielsweise in den oben zitierten Literaturstellen beschrieben ist. Die Reaktivkomponenten A) und B) werden dabei in solchen Mengen eingesetzt, die einer Isocyanat-Kennzahl, bezogen auf diese beiden Komponenten, von 70 bis 130, vorzugsweise von 90 bis 120 entsprechen.

Die Menge des in die Form eingebrachten Reaktionsgemischs wird im übrigen so bemessen, daß die Formkörper eine Dichte von 0,8 bis 1,4, vorzugsweise 1,0 bis 1,3 g/cm³ aufweisen. Bei Formkörpern einer Dichte von 0,8 bis ca. 1,0 g/cm³ handelt es sich um mikrozellulare Elastomeren, d.h. um keine echten Schaumstoffe mit mit dem bloßen Auge sichtbarer Schaumstruktur.

Dies bedeutet, daß die gegebenenfalls mitverwendeten Treibmittel weniger die Funktion eines echten Treibmittels als vielmehr die Funktion eines Fließmittels ausüben. Formkörper mit einer über 1,2 g/cm³ liegenden Dichte resultieren insbesondere dann, wenn mineralische Füllstoffe mitverwendet werden.

Die Ausgangstemperatur des in die Form eingebrachten Reaktionsgemischs aus den Komponenten A) und B) liegt im allgemeinen zwischen 20 und 80, vorzugsweise 40 bis 70° C. Die Temperatur der Form liegt im allgemeinen bei 30 bis 130, vorzugsweise 40 bis 120° C und besonders bevorzugt 90 bis 110° C.

Bei den zum Einsatz gelangenden Formwerkzeugen handelt es sich um solche der an sich bekannten Art, vorzugsweise aus Aluminium oder Stahl. Zur Verbesserung der Entformungseigenschaften können die Innenwände der verwendeten Form gegebenenfalls mit bekannten äußeren Formtrennmitteln beschichtet werden.

Die in der Form entstehenden Formkörper können im allgemeinen nach einer Formstandzeit von 5 bis 180 Sekunden entformt werden.

Gegebenenfalls schließt sich an der Entformung ein Tempern bei einer Temperatur von ca. 60 bis 180° C während eines Zeitraums von 30 bis 120 Minuten an.

Die nach dem erfindungsgemäßen Verfahren erhältlichen Formkörper eignen sich insbesondere zur Herstellung von flexiblen Karosserieelementen, wie z.B. Automobilfront- und Heckschürzen, Seitenverkleidungen, Kotflügeln und Längsträgern (=Schwellern) oder auch gegebenenfalls glasfaserfrei als Run-flat-tyre (Laufhilfe bei defekten Reifen).

In den nachfolgenden Beispielen beziehen sich alle Prozentangaben, soweit nichts anders lautendes vermerkt, auf das Gewicht.

### Beispiele

Die Verarbeitung der in den folgenden Beispielen beschriebenen Rezepturen erfolgte mit Hilfe der Reaktionsspritzgußtechnik.

Die NCO-Semiprepolymeren (= Komponente A)) und die das Diamin c) enthaltende Komponente B) wurden einem Hochdruckdosieraggregat zugeführt und nach intensiver Vermischung in einem zwangsgesteuerten Mischkopf in kürzester Zeit in ein temperierbares heißes Metallwerkzeug gedrückt, wobei die Forminnenwand mit einem gebrauchsfertigen, handelsüblichen äußeren Formtrennmittel auf Seifenbasis RTCW 2006 der Fa. Chem Trend beschichtet war.

Das Plattenwerkzeug aus Stahl erlaubt die Herstellung von Prüfplatten der Abmessungen 300 x 200 x 3 mm.

Das Füllen des Werkzeugs erfolgt von der Längsseite über einen Staubalkenanguß.

### Beispiel 1 (Herstellung eines Semiprepolymeren A)

92 kg eines Polyisocyanatgemischs der Diphenylmethanreihe mit einem NCO-Gehalt von 32,5 %, einem Anteil an Diisocyanatodiphenylmethan-Isomeren von 90 %, (zum Rest höherfunktionelle Polyisocyanate), die ihrerseits zu ca. 90 % aus 4,4-'Diisocyanatodiphenylmethan bestehen (=Komponente a) werden mit 109,7 kg Polypropylenglykol des Molekulargewichts 2 000 (=Komponente b) während zwei Stunden bei 80° C umgesetzt. Das Endprodukt hat einen NCO-Gehalt von 12,4 % und eine Viskosität von 2 200 mPa.s bei 25° C.

### Beispiel 2 (erfindungsgemäßes Verfahren)

100 Gew.-Teile des Semiprepolymeren A) aus Beispiel 1 (Komponente A) werden mit 29,6 Gew.-Teilen einer Mischung (= Komponente B) aus 14,43 Gew.-Teilen 1-Methyl-3,5-diethyl-2,4-diaminobenzol, 7,77 Gew.-Teilen 1-Methyl-3,5-diethyl-2,6-diaminobenzol, 2,96 Gew.-Teilen eines Polyrizinolsäureesters der OH-Zahl 30, 1,48 Gew.-Teilen ®Jeffamin D 400 (Verkaufsprodukt der Fa. Texaco, difunktioneller aliphatischer Aminopolyether des Molekulargewichts 400), 1,48 Gew.-Teilen Zinkstearat und 1,48 Gew.-Teilen eines Polyetherpolyols der OH-Zahl 810, hergstellt durch Propoxylierung von Ethylendiamin, nach dem RSG-Verfahren verarbeitet (Verhältnis der Volumenströme ca. 4:1).

Die Werkzeugtemperatur betrug 110° C und die Formstandzeit 30 s. Unter diesen Bedingungen resultierte ein Formteil mit sehr gutem Entformungsverhalten und einwandfreiem Aussehen.

Die folgenden mechanischen Werte wurden ermittelt nach einer Temperung der Testplatten von 30 min bei 120° C bzw. 160° C.

| Kennzahl = 105 | 120° C | 160° C |
|---|---|---|
| Rohdichte (DIN 53420): | 1,104 g/cm³ | 1,104 g/cm³ |
| Shore D (DIN 53505): | 65 | 69 |
| Zugfestigkeit (DIN 53504): | 33 MPa | 34 MPa |
| Bruchdehnung (DIN 53504): | 146 % | 156 % |
| SAG-Test 100 mm Überstand: | 5 mm | 3 mm |
| SAG-Test 150 mm Überstand: | 23 mm | 21 mm |
| Schwindung x-Achse | 2,009 % | 2,075 % |
| Schwindung y-Achse | 1,990 % | 2,032 % |

### Beispiel 3 (erfindungsgemäßes Verfahren)

In diesem Beispiel wurde ebenso verfahren wie in Beispiel 2, mit dem Unterschied, daß zum Semiprepolymer A vor der Umsetzung zusätzlich 20 Gew.-Teile Glasfasern als Füllstoff zugesetzt wurden. (Volumenströme ca. 4,5:1)

| Kennzahl = 105 | 120° C | 160° C |
|---|---|---|
| Rohdichte (DIN 53420): | 1,231 g/cm³ | 1,227 g/cm³ |
| Shore D (DIN 53505): | 70 | 73 |
| Zugfestigkeit (DIN 53504)¹⁾: | L=29/Q=26MPa | L=29/Q=26MPa |
| Bruchdehnung (DIN 53504): | L=100/Q=85 % | L=95/Q=90 % |
| SAG-Test 100 mm Überstand²⁾: | 3 mm | 0 mm |
| SAG-Test 150 mm Überstand: | 16 mm | 8 mm |
| Schwindung x-Achse | 0,519 % | 0,639 % |
| Schwindung y-Achse | 1,378 % | 1,548 % |

| | | |
|---|---|---|
| ¹⁾ L = Längsrichtung Q = Querrichtung | | |
| ²⁾ Durchführung SAG-Tests : 60 min bei 160° C | | |

### Beispiel 4 (Einfluß der Funktionalität der Komponenete b) auf die Viskosität der Semiprepolymeren A)

Nachstehend werden tabellarisch die Viskositäten (bei 25° C) von NCO-Semiprepolymeren A mit NCO-Gehalten von 11,5, 12,5 bzw. 13,5 % gegenüber gestellt. Zur Herstellung der NCO-Semiprepolymeren wurden stets die Polyisocyanatskomponente a) des Beispiels 1, Polypropylenglykol der OH-Zahl 56 (Funktionalität = 2) bzw. propoxyliertes Trimethylolpropan der OH-Zahl 56, Funktionalität = 3) eingesetzt. Der Vergleich zeigt die extreme Viskositätserhöhung bei Erhöhung der Funktionalität der Komponente b).

**Tabelle 1**

| OH-Zahl [mgKOH/g] | Funktionalität | Viskosität²⁾ bei 25° C [mPa.s] | NCO-Gehalt [%] |
|---|---|---|---|
| 56 | 2 | 2 800 | 11,5 |
| 56 | 3 | 4 700 | 11,5 |
| 56 | 2 | 2 200 | 12,5 |
| 56 | 3 | 3 700 | 12,5 |
| 56 | 2 | 1 700 | 13,5 |
| 56 | 3 | 2 800 | 13,5 |

## Patentansprüche

1. Verfahren zur Herstellung von gegebenenfalls zellförmigen, elastischen Formkörpern mit einer geschlossenen Oberflächenschicht aus Urethangruppen aufweisenden Polyharnstoff-Elastomeren auf der Basis von
a) einer Polyisocyanatkomponente, bestehend aus Gemischen von 4,4'-Diisocyanatodiphenylmethan, 2,2'-Diisocyanatodiphenylmethan und 2,4'-Diisocyanatodiphenylmethan mit ihren höheren Homologen,
b) einer Polyolkomponente mit einem (mittleren) Molekulargewicht von 1500 bis 3000, bestehend aus mindestens einem, gegebenenfalls dispergierte organische Füllstoffe enthaltenden Polyetherpolyol,
c) aromatischen Diaminen, die zumindest in jeweils einer ortho-Stellung zu den Aminogruppen einen Alkylsubstituenten aufweisen
und gegebenenfalls
d) den aus der Polyurethanchemie an sich bekannten Hilfs- und Zusatzmitteln,
wobei als Komponente d), gegebenenfalls neben weiteren Hilfs- und Zusatzmitteln, gegenüber Isocyanatgruppen reaktionsfähige Verbindungen, ausgewählt aus der Gruppe bestehend aus aliphatischen, gegebenenfalls tertiäre Aminstickstoffatome aufweisenden Polyolen des Molekulargewichtsbereichs 62 bis 1000, aliphatischen Aminopolyethern des Molekulargewichtsbereichs 200 bis 3000 mit mindestens zwei primären Aminogruppen pro Molekül und Gemischen derartiger Verbindungen in einer Gesamtmenge von bis zu 50 Äquivalentprozent im Sinne der Isocyanat-Additionsreaktion, bezogen auf die Aminogruppen der Komponente c), als Teil der Komponente B) mitverwendet werden, wobei in einem ersten Reaktionsschritt mindestens 90 % der Komponente b) mit der Gesamtmenge der Komponente a) unter Einhaltung eines NCO/OH-Äquivalentverhältnisses von mindestens 3,2:1 zu einem NCO-Semiprepolymeren A) umgesetzt wird, welches anschließend in einem zweiten Reaktionsschritt nach dem Prinzip der Reaktionsspritzgußtechnik in geschlossenen Formen mit einer Komponente B) unter Einhaltung einer NCO-Kennzahl, bezogen auf die Isocyanatgruppen der Komponente A) und die gegenüber Isocyanatgruppen reaktionsfähigen Gruppen der Komponente B) von 70 bis 130 zur Reaktion bringt, wobei die Komponente B) aus 0 bis 10 % der Komponente b), der Komponente c) und zumindest den gegenüber Isocyanatgruppen reaktionsfähigen Einzelkomponenten der gegebenenfalls eingesetzten Komponente d) besteht, und wobei gegebenenfalls außerdem mitverwendete Hils- und Zusatzmittel d) der Komponente A) und/oder der Komponente B) einverleibt werden, dadurch gekennzeichnet, daß bei der Herstellung des NCO-Semiprepolymeren A) Art und Mengenverhältnisse der Komponenten a) und b) so gewählt werden, daß die Semiprepolymeren A) bei 25 °C eine Viskosität von maximal 3000 mPa.s und einen NCO-Gehalt von 8 bis 15 Gew.-% aufweisen und die Komponente b) eine mittlere Hydroxylfunktionalität von maximal 2,4 aufweist.

2. Verfahren gemäß Anspruch 1, dadurch gekennzeichnet, daß man als Komponente b) Polyetherpolyole eines (mittleren) Molekulargewichts von 1500 bis 3000 und einer (mittleren) Hydroxylfunktionalität von 1,9 bis 2,1 verwendet.

3. Verfahren gemäß den Ansprüchen 1 oder 2, dadurch gekennzeichnet, daß man als Komponente b) Polyetherpolyole mit überwiegend sekundären Hydroxylgruppen verwendet, die durch Propoxylierung geeigneter Startmoleküle zugänglich sind.

## Claims

1. Process for the production of optionally cellular, resilient mouldings with a non-cellular surface layer from polyurea elastomers containing urethane groups and based on
a) a polyisocyanate component consisting of mixtures of 4,4'-diisocyanatodiphenylmethane, 2,2'-diisocyanatodiphenylmethane and 2,4'-diisocyanatodiphenylmethane with the higher homologues thereof,
b) a polyol component having an (average) molecular weight of 1500 to 3000 consisting of at least one polyether polyol optionally containing dispersed organic fillers,
c) aromatic diamines having an alkyl substituent in at least one ortho position relative to the amino groups
and optionally
d) the auxiliary substances and additives known *per se* from polyurethane chemistry,
wherein component d) also comprises, as a proportion of component B), optionally together with further auxiliary substances and additives, compounds capable of reacting with isocyanate groups selected from the group consisting of aliphatic polyols optionally containing tertiary amine nitrogen atoms and of the molecular weight range from 62 to 1000, aliphatic amino polyethers of the molecular weight range from 200 to 3000 and having at least two primary amino groups per molecule and mixtures of such compounds in a total quantity of up to 50 equivalent percent for the purposes of the isocyanate addition reaction, relative to the amino groups of component c),
wherein in a first reaction step at least 90% of component b) is reacted with the entire quantity of component a) while maintaining an NCO/OH equivalent ratio of at least 3.2:1 to yield an NCO semiprepolymer A), which is then reacted in a second reaction step using the reaction injection moulding technique in closed moulds with a component B) while maintaining an NCO index, relative to the isocyanate groups of component A) and the groups of component B) capable of reacting with isocyanate groups, of 70 to 130, wherein component B) consists of 0 to 10% of component b), component c) and at least the optionally used individual components of component d) capable of reacting with isocyanate groups, and wherein optionally additionally used auxiliary substances and additives d) are incorporated into component A) and/or component B), characterised in that, when producing the NCO semiprepolymer A), the nature and quantity ratios of components a) and b) are selected such that the semiprepolymers A) have a viscosity at 25°C of at most 3000 mPa.s and an NCO content of 8 to 15 wt.% and component b) has an average hydroxyl functionality of at most 2.4.

2. Process according to claim 1, characterised in that polyether polyols having an (average) molecular weight of 1500 to 3000 and an (average) hydroxyl functionality of 1.9 to 2.1 are used as component b).

3. Process according to claim 1 or 2, characterised in that polyether polyols having predominantly secondary hydroxyl groups which axe obtainable by propoxylating suitable starter molecules are used as component b).

## Revendications

1. Procédé pour la fabrication de corps moulés élastiques, le cas échéant cellulaires, possédant une couche superficielle fermée, constitués par des élastomères de polyurée présentant des groupes uréthane, à base de:
a) un composant de polyisocyanate constitué par des mélanges du 4,4'-diisocyanatodiphénylméthane, du 2,2'-diisocyanatodiphénylméthane et du 2,4'-diisocyanatodiphénylméthane avec leurs homologues supérieurs,
b) un composant de polyol possédant un poids moléculaire (moyen) de 1500 à 3000, constitué d'au moins un polyéther-polyol contenant le cas échéant des matières de charge organiques à l'état dispersé,
c) des diamines aromatiques qui présentent un substituant alkyle au moins à chaque position ortho par rapport aux groupes amino,
et le cas échéant
d) les adjuvants et les additifs connus en soi de la chimie des polyuréthannes,
dans lequel on utilise de manière conjointe, à titre de composant d), comme partie du composant B), le cas échéant outre d'autres adjuvants et additifs, des composés aptes à réagir vis-à-vis de groupes isocyanate choisis parmi le groupe constitué par des polyols aliphatiques présentant le cas échéant des atomes d'azote aminique tertiaire, du domaine de poids moléculaire de 62 à 1000, des aminopolyéthers aliphatiques du domaine de poids moléculaire de 200 à 3000 contenant au moins deux groupes amino primaires par molécule et des mélanges de composés de ce type en une quantité totale jusqu'à concurrence de 50 équivalents-pour cent dans le sens de la réaction d'addition d'isocyanates, rapportés aux groupes amino du composant c),
dans lequel, dans une première étape réactionnelle, on fait réagir au moins 90% du composant b) avec la quantité totale du composant a) en maintenant un rapport d'équivalents NCO/OH d'au moins 3,2:1 pour obtenir un semi-prépolymère A) contenant des groupes NCO que l'on amène ensuite à réagir dans une deuxième étape réactionnelle, conformément au principe de la technique du moulage réactif par injection, dans des moules fermés avec un composant B) tout en maintenant un nombre caractéristique de groupes NCO, rapporté aux groupes isocyanate du composant A) et aux groupes du composant B) aptes à réagir vis-à-vis de groupes isocyanate, de 70 à 130, le composant B) étant constitué, à concurrence de 0 à 10%, par le composant b), par le composant c) et au moins par les composants individuels du composant d) le cas échéant mis en oeuvre, aptes à réagir vis-à-vis de groupes isocyanate, et dans lequel on incorpore le cas échéant dans le composant A) et/ou dans le composant B), en outre, des adjuvants et des additifs d) utilisés de manière conjointe, caractérisé en ce que, lors de la préparation du semi-prépolymère A) contenant des groupes NCO, on sélectionne le type et les proportions des composants a) et b) de telle sorte que les semi-prépolymères A) présentent à 25°C une viscosité maximale de 3000 mPa.s et une teneur en groupes NCO de 8 à 15% en poids, et le composant b) présente une fonctionnalité hydroxyle moyenne s'élevant au maximum à 2,4.

2. Procédé selon la revendication 1, caractérisé en ce qu'on utilise, à titre de composant b), des polyéther-polyols possédant un poids moléculaire (moyen) de 1500 à 3000 et une fonctionnalité hydroxyle (moyenne) de 1,9 à 2,1.

3. Procédé selon les revendications 1 ou 2, caractérisé en ce qu'on utilise, à titre de composant b), des polyéther-polyols contenant des groupes hydroxyle principalement secondaires qui sont accessibles par propoxylation de molécules d'amorçage appropriées.
